# EUROPÄISCHE PATENTANMELDUNG

(11) **EP 1 092 683 A1**
(43) Veröffentlichungstag der Anmeldung: **18.04.2001**
(21) Anmeldenummer: 00120699.4
(22) Anmeldetag: 22.09.2000
(51) Int. Cl.: C02F 3/10, B01J 19/30

(54) **Füllkörperblock**

(30) Priorität: 15.10.1999 DE 19949689
(71) Anmelder: NORDDEUTSCHE SEEKABELWERKE GMBH & CO. KG, 26954 Nordenham (DE)
(72) Erfinder: Hahn, Mike, 26954 Nordenham (DE); Schröder, Klaus Jürgen, 26954 Nordenham (DE)
(74) Vertreter: Möller, Friedrich, Dipl.-Ing.

(57) **Zusammenfassung**

Die Erfindung betrifft einen Füllkörperblock für Tropfkörper, Tauchtropfkörper oder Festbetten zur biologischen Behandlung von Fluiden, vorzugsweise Abwasser, mit einer Mehrzahl miteinander verbundener Säulenabschnitte (11).

Erfindungsgemäß weisen die Säulenabschnitte (11) einen Querschnitt mit mindestens drei Ecken auf, wobei benachbarte Säulenabschnitte (11) im Bereich von Längskanten (13) oder Längsseiten miteinander verbunden sind, und wobei zwischen den Säulenabschnitten (11) Zwischenräume (15) gebildet sind. Der Querschnitt eines Zwischenraums entspricht etwa dem Querschnitt eines Säulenabschnitts.

## Beschreibung

Die Erfindung betrifft einen Füllkörperblock nach dem Oberbegriff des Patentanspruchs 1.

Derartige Füllkörperblöcke werden zur Bildung von Tropfkörpern, Tauchtropfkörpern oder Festbetten und zur biologischen Behandlung von Fluiden, vorzugsweise Abwässern verwendet. Dazu sind die Füllkörperblöcke mit einer Biomasse, einem sogenannten biologischen Rasen, besiedelt. Der Begriff Fluide umfasst Flüssigkeiten und Gase, beispielsweise auch Industrieabgase.

Üblicherweise werden eine Vielzahl von nebeneinander liegenden, parallelen Säulenabschnitten (Rohrabschnitte) zur Bildung von Füllkörperblöcken miteinander verbunden, etwa durch Schweißung benachbarter Mantelbereiche der Säulenabschnitte. Die Säulenabschnitte selbst weisen eine netzartig strukturierte Mantelfläche auf und sind vorzugsweise durch Extrusion hergestellt.

Aus der eigenen DE-A-43 20 469 ist ein aus Netzrohren mit kreisrundem Querschnitt zusammengesetzter Füllkörperblock bekannt. Zwischen jeweils aneinander liegenden Netzrohren sind sogenannte Zwickel gebildet. Es handelt sich um relativ kleine Zwischenräume zwischen den einzelnen Netzrohren. Die Zwischenräume erstrecken sich parallel zu den Netzrohren und bilden ebenso wie diese Strömungskanäle, jedoch mit einem weit geringeren Querschnitt. Bei der Reinigung von mit Schmutz beladenem Abwasser bilden sich in den Zwickelbereichen Schlammnester und Verstopfungen. Das biologische Verhalten ist innerhalb der Zwickel ein anderes als innerhalb der Netzrohre und schwer vorherbestimmbar. Der Wirkungsgrad der biologischen Abwasserbehandlung wird dadurch vermindert.

Der Erfindung liegt die Aufgabe zugrunde, einen einfach herzustellenden Füllkörperblock zu schaffen, der eine erhöhte Wirksamkeit aufweist.

Erfindungsgemäß wird die Aufgabe durch einen Füllkörperblock mit den Merkmalen des Anspruchs 1 gelöst. Die Säulenabschnitte weisen einen derartigen Querschnitt auf und sind derart miteinander verbunden, dass zwischen den Säulenabschnitten Zwischenräume gebildet sind, die selbst einen Querschnitt von etwa der Größe des Querschnitts eines Säulenabschnitts aufweisen. Dadurch liegen in den Zwischenräumen im Wesentlichen dieselben Bedingungen vor, wie in den Säulenabschnitten selbst. Es sind nur noch Strömungskanäle mit nahezu gleichen Querschnitten vorhanden. Störungen der Biologie werden vermieden.

Die Säulenabschnitte weisen einen Querschnitt mit mindestens drei Ecken auf. Besonders bevorzugt ist ein quadratischer Querschnitt. Möglich ist auch ein sechseckiger Querschnitt. Andere Formen sind denkbar. Wichtig ist, dass entstehende Zwischenräume zwischen den Säulenabschnitten ausreichende Querschnitte aufweisen.

Bei der Verbindung von Säulenabschnitten mit sechseckigem Querschnitt ist die Anzahl der Zwischenräume weit geringer als die Anzahl der Säulenabschnitte. Gleichwohl weist jeder Zwischenraum einen Querschnitt von nahezu der Größe des Querschnitts eines Säulenabschnitts auf.

Vorteilhafterweise entspricht die Form des Querschnitts der Zwischenräume der Form des Querschnitts der Säulenabschnitte. Notwendige Voraussetzung ist dies aber nicht.

Die einzelnen Säulenabschnitte sind im Bereich ihrer Längskanten oder Längsseiten miteinander verbunden, etwa durch Schweißen. Übliche Füllkörperblöcke sind aus thermoplastischem Kunststoff hergestellt, so dass ein Schweißen leicht möglich ist. Die Bereiche zwischen den Ecken bzw. Längskanten, die Längsseiten, sind plan ausgebildet, können aber auch konkav, konvex oder in anderer Weise ausgebildet sein.

Die Säulenabschnitte können im Bereich ihrer Längskanten abgeflacht oder gerundet sein. Dadurch ist ein innigerer Kontakt beim Verbinden der einzelnen Säulenabschnitte möglich. Die daraus resultierende geringfügige Verkleinerung der Zwischenräume relativ zum Querschnitt der Säulenabschnitte ist tolerierbar. Der zu beachtende Mindestquerschnitt für die Zwischenräume kann durch Versuche ermittelt werden.

Neben den oben bereits genannten Vorteilen ergibt sich gegenüber der herkömmlichen Ausführung mit kreisrunden Säulenabschnitten eine Reduzierung des Gewichts pro m³ Füllkörperblock und entsprechend ein reduzierter Materialaufwand. Die Verschweißung oder Verklebung der Säulenabschnitte entlang kontinuierlicher, streifenförmiger Bereiche oder an mit Abstand zueinander angeordneten Punkten im Bereich der Längsseiten oder Längskanten ergibt eine außerordentlich hohe Festigkeit des Füllkörperblocks insgesamt. Alternativ ist eine sogenannte Spiegelschweißung an den Enden der Säulenabschnitte möglich. Die Festigkeit ist jedoch geringer als bei der Verbindung der Längsseiten oder -kanten. Beide Verbindungsarten können auch miteinander kombiniert werden.

Die Verbindung entlang der Längskanten oder Langsseiten vermeidet gegenüber der Spiegelschweißung eine Verengung des wirksamen Querschnitts der Strömungskanäle durch die entstehenden Schweißpunkte.

Weitere Merkmale der Erfindung und deren Vorteile ergeben sich aus den übrigen Unteransprüchen und der Beschreibung.

Bevorzugte Ausführungsbeispiele der Erfindung werden nachfolgend anhand von Zeichnungen näher erläutert. Es zeigen:
- Fig. 1: eine Ansicht von Säulenabschnitten mit einer Blickrichtung parallel zur Längsrichtung der Säulenabschnitte,
- Fig. 2: eine Draufsicht analog Fig. 1, jedoch Säulenabschnitte mit einer anderen Querschnittsform,
- Fig. 3: eine Draufsicht analog Fig. 1, mit einer nochmals geänderten Querschnittsform,
- Fig. 4: eine Draufsicht analog Fig. 1 auf Säulenabschnitte mit dreieckigem Querschnitt und gerundeten Längskanten,
- Fig. 5: eine Draufsicht analog Fig. 1, auf Säulenabschnitte mit quadratischem Querschnitt und abgeflachten Längskanten.

Ein Füllkörperblock mit einer Anordnung von Säulenabschnitten 11 wird zur biologischen Behandlung von Abwässern verwendet. Ein oder auch mehrere mit biologischem Rasen besiedelte Füllkörperblöcke sind als sogenannter Tropfkörper feststehend in einem Flüssigkeitsbecken angeordnet, während das Abwasser zur biologischen Behandlung desselben durch das Flüssigkeitsbecken und den Füllkörperblock hindurch geleitet wird. Auch können die Füllkörperblöcke als sogenannte Tauchtropfkörper in einem Tauchtrommelreaktor angeordnet sein, wobei durch einen drehenden Antrieb des Reaktors das in einem Flüssigkeitsbecken befindliche Abwasser durch die Füllkörperblöcke hindurch strömt.

Die Säulenabschnitte 11 weisen eine netzartige Mantelfläche 12 auf. Im vorliegenden Fall sind die Säulenabschnitte 11 sogenannte Netzrohre. Diese sind durch schräg gerichtete innere und hierzu kreuzende äußere Netzstränge gebildet (nicht gezeigt).

Zur Bildung eines Füllkörperblocks sind viele zueinander parallele Säulenabschnitte 11 entlang ihrer Längskanten 13 oder Längsseiten 14 miteinander verbunden. Je nach Querschnittsform der einzelnen Säulenabschnitte 11 und Relativanordnung derselben entstehen Zwischenräume 15 unterschiedlicher Art.

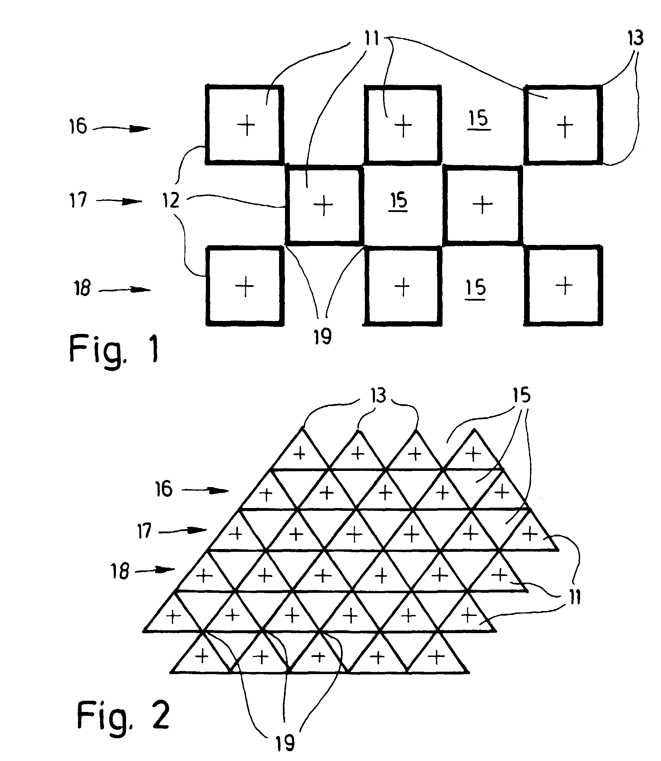

Gemäß Fig. 1 weisen die Säulenabschnitte 11 jeweils einen quadratischen Querschnitt auf und sind jeweils im Bereich der aneinander stoßenden Längskanten 13 miteinander verbunden, etwa durch Schweißung oder Klebung, und zwar kontinuierlich entlang der Längskanten, entlang streifenförmiger Bereiche oder punktweise entlang der Längskanten 13. Je vier Säulenabschnitte 11 schließen zwischen sich einen Zwischenraum 15 ein, dessen Querschnitt etwa dem Querschnitt eines Säulenabschnitts 11 entspricht. Dabei sind die Säulenabschnitte in jeder Reihe 16, 17, 18 so ausgerichtet, dass die Mantelflächen 12 parallel zueinander verlaufen und auf jeden Säulenabschnitt 11 ein Zwischenraum 15 folgt. Die Säulenabschnitte 11 der einen Reihe 17 sind gegenüber den Säulenabschnitten 11 der anderen Reihen 16, 18 versetzt, d.h. auf Lücke angeordnet. Entsprechend ergibt sich die oben erwähnte Formation, nach der jeder Zwischenraum 15 durch vier Säulenabschnitte 11 begrenzt ist.

Zum besseren Verständnis sind in den Fig. 1 bis 3 die Säulenabschnitte 11 jeweils mit einem Kreuz versehen, während die Zwischenräume 15 leer dargestellt sind.

Durch die Zwischenräume 15 kann das Abwasser mit derselben Geschwindigkeit und mit demselben Widerstand wie auch durch die Säulenabschnitte 11 strömen. Es ergeben sich keine Schlammnester oder andere Verstopfungen im laufenden Betrieb. Sowohl innerhalb als auch außerhalb der Mantelflächen 12 kann, der vorhandene biologische Rasen effektiv zur biologischen Handhabung des Abwassers genutzt werden.

Fig. 2 zeigt eine Draufsicht auf einen Teilausschnitt eines Füllkörperblocks analog Fig. 1, jedoch mit dreieckigem Querschnitt der einzelnen Säulenabschnitte 11. Auch hier sind letztere jeweils im Bereich ihrer Längskanten 13 miteinander verbunden und von Reihe zu Reihe auf Lücke angeordnet. Die jeweils entstehenden Zwischenräume 15 weisen ebenfalls einen dreieckigen Querschnitt auf, dessen Größe dem Querschnitt der dreieckigen Säulenabschnitte 11 entspricht. Je drei Säulenabschnitte 11 stoßen im Bereich einer gemeinsamen Verbindungsstelle 19 aneinander bzw. sind dort miteinander verbunden.

In Fig. 1 stoßen demgegenüber im Bereich der Verbindungsstellen 19 nur je zwei Säulenabschnitte 11 entlang der Längskanten 13 aneinander.

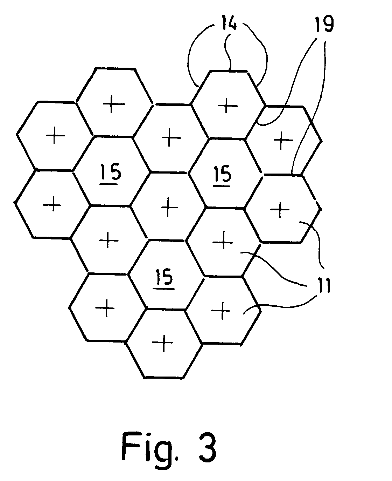

Fig. 3 zeigt abermals eine Abwandlung durch Verwendung von Säulenabschnitten mit anderem, nämlich sechseckigem Querschnitt. Hier sind die einzelnen Säulenabschnitte 11 im Bereich von Längsseiten 14 miteinander verbunden. Entsprechend ist der Kontakt zwischen den Säulenabschnitten 11 nicht punkt- oder linienförmig, sondern flächenförmig. Je sechs Säulenabschnitte 11 begrenzen einen Zwischenraum 15. Auch hier weist der Zwischenraum 15 einen Querschnitt auf, dessen Größe der Größe des Querschnitts eines einzelnen Säulenabschnitts 11 entspricht. Allerdings ist über den gesamten Füllkörperblock gesehen das Volumen aller Zwischenräume wesentlich kleiner als das Volumen aller Säulenabschnitte 11. Im Gegensatz dazu verteilen sich in den Ausführungsformen der Fig. 1 und 2 die genannten Volumina auf jeweils etwa 50% des Gesamtvolumens eines Füllkörperblocks.

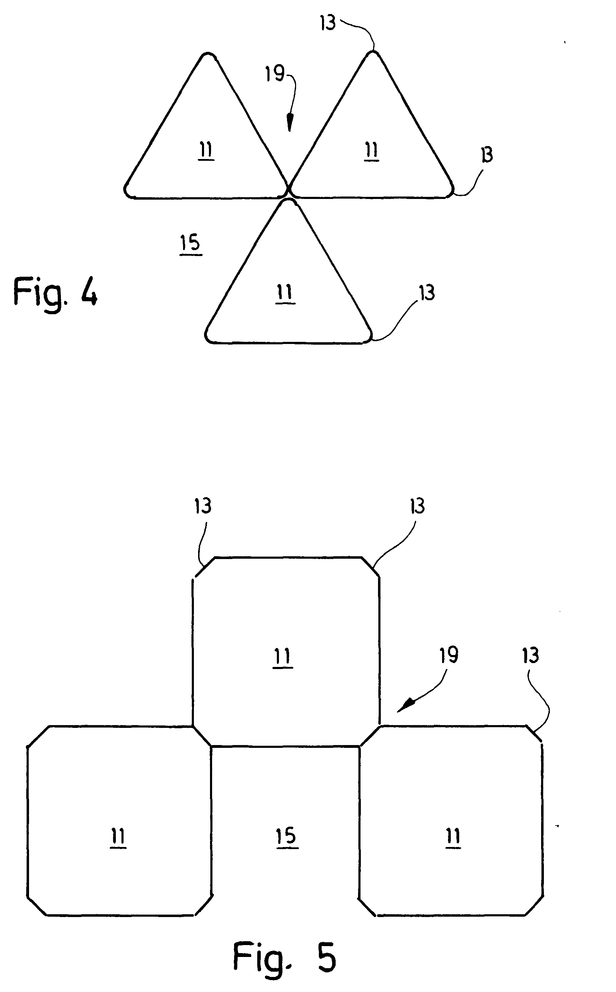

Besondere Maßnahmen zur Erhöhung der Festigkeit der Verbindung zwischen den einzelnen Säulenabschnitten 11 zeigen die Fig. 4 und 5.

Gemäß Fig. 4 weisen die Säulenabschnitte 11 abgerundete Längskanten 13 auf. Dadurch entstehen nahezu flächige Berührungen zwischen den jeweils drei aneinander grenzenden Säulenabschnitten 11 im Verbindungsbereich 19.

Gemäß Fig. 5 können die Längskanten 13 auch abgeflacht sein, insbesondere in Verbindung mit Säulenabschnitten 11 mit quadratischem Querschnitt. Auch hier entstehen flächenhafte Verbindungsbereiche 19 an Stelle der in Fig. 1 gezeigten, annähernd linienhaften Verbindungsbereiche. Die in Fig. 5 erkennbare geringfügige Verkleinerung des Querschnitts des Zwischenraums 15 (ebenso in Fig. 4) ist unerheblich.

In den Verbindungsbereichen 19 werden die Säulenabschnitte 11 durch Punkt-, Linien- oder Flächenschweißung miteinander verbunden. Hierzu werden in bekannter Weise Heiz- und Pressorgane einer Schweißeinrichtung zangenartig gegen die Säulenabschnitte 11 bewegt. In Folge der Einwirkung von Wärme und Druck schmilzt das thermoplastische Material in den Verbindungsbereichen 19 und fließt zur Bildung der Schweißung ineinander.

### Bezugszeichenliste:

- 11: Säulenabschnitt
- 12: Mantelfläche
- 13: Längskante
- 14: Längsseite
- 15: Zwischenraum
- 16: Reihe
- 17: Reihe
- 18: Reihe
- 19: Verbindungsbereich

## Patentansprüche

1. Füllkörperblock für Tropfkörper, Tauchtropfkörper oder Festbetten zur biologischen Behandlung von Fluiden, vorzugsweise Abwasser, mit einer Mehrzahl miteinander verbundener (paralleler) Säulenabschnitte (11), **dadurch gekennzeichnet,** dass die Säulenabschnitte (11) einen Querschnitt mit mindestens drei Ecken aufweisen, dass benachbarte Säulenabschnitte (11) im Bereich von Längskanten (13) oder Längsseiten (14) miteinander verbunden sind und dass zwischen den Säulenabschnitten (11) Zwischenräume (15) gebildet sind, wobei der Querschnitt je eines Zwischenraums (15) etwa dem Querschnitt eines Säulenabschnitts (11) entspricht.

2. Füllkörperblock nach Anspruch 1, **dadurch gekennzeichnet,** dass die Säulenabschnitte (11) einen viereckigen Querschnitt aufweisen, insbesondere einen rechteckigen oder quadratischen Querschnitt.

3. Füllkörperblock nach Anspruch 1, **dadurch gekennzeichnet,** dass die Säulenabschnitte (11) einen dreieckigen Querschnitt aufweisen, insbesondere einen gleichschenkligen oder gleichseitigen Querschnitt.

4. Füllkörperblock nach Anspruch 1, **dadurch gekennzeichnet,** dass die Säulenabschnitte (11) einen sechseckigen Querschnitt aufweisen, insbesondere einen gleichseitigen und/oder gleichwinkligen Querschnitt.

5. Füllkörperblock nach einem oder mehreren der Ansprüche 1 bis 4, **dadurch gekennzeichnet,** dass die Säulenabschnitte (11) im Bereich ihrer Längskanten (13) abgeflacht oder gerundet sind.

6. Füllkörperblock nach einem oder mehreren der Ansprüche 1 bis 5, **dadurch gekennzeichnet,** dass die benachbarten Säulenabschnitte (11) entlang eines oder mehrerer kontinuierlicher streifenförmiger oder linienförmiger Bereiche miteinander verbunden sind.

7. Füllkörperblock nach einem oder mehreren der Ansprüche 1 bis 5, **dadurch gekennzeichnet,** dass die benachbarten Säulenabschnitte (11) über mit Abstand zueinander angeordnete Punkte miteinander verbunden sind.

8. Füllkörperblock nach einem oder mehreren der Ansprüche 1 bis 7, **dadurch gekennzeichnet,** dass die Verbindungen - streifenförmige Bereiche, Punkte - der benachbarten Säulenabschnitte (11) durch Schweißung oder Klebung gebildet sind.

9. Füllkörperblock nach einem oder mehreren der Ansprüche 1 bis 8, **dadurch gekennzeichnet,** dass die Säulenabschnitte (11) als Netzsäulen mit vorzugsweise netzartig strukturierter Mantelfläche (12) ausgebildet sind.

10. Füllkörperblock nach einem oder mehreren der Ansprüche 1 bis 9, **dadurch gekennzeichnet,** dass die Säulenabschnitte (11) aus extrudierbaren und/oder thermoplastischen Kunststoffen hergestellt sind.
